(19) Europäisches Patentamt
European Patent Office
Office européen des brevets

(11) Publication number: **0 354 621 A1**

(12) # EUROPEAN PATENT APPLICATION

(21) Application number: 89202057.9

(51) Int. Cl.⁴: C07C 309/31 , C10M 135/10

(22) Date of filing: 08.08.89

(30) Priority: 12.08.88 GB 8819215

(43) Date of publication of application:
14.02.90 Bulletin 90/07

(84) Designated Contracting States:
BE DE ES FR GB IT NL

(71) Applicant: SHELL INTERNATIONALE RESEARCH MAATSCHAPPIJ B.V.
Carel van Bylandtlaan 30
NL-2596 HR Den Haag(NL)

(72) Inventor: Van Kruchten, Eugene Marie Godfried Andre
Badhuisweg 3
NL-1031 CM Amsterdam(NL)
Inventor: Van Well, Rudolf Richard
Badhuisweg 3
NL-1031 CM Amsterdam(NL)

(74) Representative: Aalbers, Onno et al
P.O. Box 302
NL-2501 CH The Hague(NL)

(54) **Overbased sulphonates and their use as additives.**

(57) The invention provides overbased alkaline earth metal mono-alkyl orthoxylene sulphonates wherein the alkyl substituent contains 10-13 carbon atoms, and lubricating oils containing them.

EP 0 354 621 A1

## OVERBASED SULPHONATES AND THEIR USE AS ADDITIVES

The present invention relates to overbased sulphonates, more particularly to basic alkaline earth metal alkyl orthoxylene sulphonates, and to lubricating oil compositions containing such sulphonates.

The use of alkaline earth metal salts of organic sulphonic acids as additives for lubricating oil compositions is well known. These salts have dispersant properties so that, when applied in such luboil compositions, they ensure that the insides of the engine cylinders remain clean and that deposition of carbonaceous products on pistons and in piston grooves is counteracted, thereby preventing piston-ring sticking.

It is also well-known to prepare basic (or overbased) alkaline earth metal salts of such acids. The overbasing provides an alkaline reserve which, when applied in lubricating oil compositions, reacts with and neutralises acidic compounds formed during the operation of the engine in which the composition is applied. Hence, sludge which may arise is maintained dispersed due to the dispersant property of the salt, and acids which would enhance sludge formation are neutralised.

European Patent Specification no. 0 001318 describes overbased alkaline earth sulphonates of alkylated orthoxylene or toluene, together with the application of such sulphonate salts as lubricant additives. The alkyl group presents in such xylene or toluene sulphonates (excluding the methyl group forming part of the xylene or toluene nucleus) is defined as containing 15 to 40 carbon atoms, and indeed it has previously been generally accepted that alkaryl sulphonates having shorter chain alkyl groups (i.e. less than 15 carbon atoms) do not possess sufficient oil solubility to produce a stable luboil composition. Thus, for example, as will be demonstrated hereinafter, experiments with alkylbenzene sulphonates have confirmed that the blend stability of a $C_{24}$alkyl product is satisfactory, whereas reduction of the carbon chain length to $C_{18}$ results in significant deterioration.

It has now surprisingly been found, however, that in the case of orthoxylene sulphonates, slightly shorter alkyl substituents can yield dispersant materials which are as effective as their longer chain analogues, and in addition possess a greater level of stability in oil compositions when admixed with salicylate dispersants. It will be appreciated that different luboil manufacturers often use different dispersant materials in formulating their final package, whilst the customer may sometimes add luboil from one source to an engine containing luboil from a different source. For this reason, it is important to protect such customers by ensuring the stability of such mixed products.

Accordingly, the present invention provides an overbased alkaline earth metal alkyl orthoxylene sulphonate wherein the alkyl group contains 10-13, especially 11-12 carbon atoms. The "alkyl" as used in this context refers to an alkyl substituent present on a xylene nucleus, and as such does not denote or refer to the methyl groups inherently present as part of the xylene nucleus. Said alkyl groups may be branched or straight chain by preference straight linear, and preferably only one such group is present on each xylene nucleus; i.e. the compound is a mono-alkyl orthoxylene sulphonate.

The overbased sulphonates of this invention are prepared by sulphonation of the chosen alkyl orthoxylene, followed by overbasing. Any of the established sulphonation techniques may be used for conversion of the starting alkyl orthoxylene, e.g. by reaction with concentrated sulphuric acid, with oleum, or with sulphur trioxide, followed by purification according to standard techniques.

The alkyl orthoxylene sulphonic acid thus produced is then converted to a basic (overbased) salt by reaction with an alkaline earth metal compound according to any of the known procedures. Thus, the sulphonic acid is suitably mixed in an organic solvent with an excess of a hydroxide and/or oxide of the alkaline earth metal and, if a highly overbased product is required, carbon dioxide may be passed through the resulting mixture. The alkaline earth metal may be magnesium, calcium or barium, but for reasons of practical economics calcium is normally preferred.

The organic solvent is suitably a hydrocarbon, such as an aromatic hydrocarbon or a hydrocarbon fraction rich in aromatics, such as gasoline, with compounds such as benzene, toluene or, especially, xylene being preferred. The amount of the alkaline earth metal (hydr)oxide added should be more than a stoichiometric equivalent, and is normally several stoichiometric equivalents in excess of that needed to neutralise the sulphonic acid to yield highly basic products. It will be appreciated by those skilled in the art that addition of carbon dioxide is necessary in the preparation of highly basic products in order for the product to be homogeneous and stable. Detailed descriptions of overbasing processes are given in many patent specifications, for example UK Patent No. 786167.

The basic salts are excellent dispersant additives in oils. Therefore the present invention also provides lubricating oil compositions comprising a major amount of a base oil and a minor amount of an overbased alkaline earth metal sulphonate of the invention. Preferably the base oil is a lubricating base oil, and

conveniently constitutes more than 50%w of the composition. It can be selected from mineral lubricating oils of varying viscosities, but it also includes a synthetic lubricant, such as ester-type lubricant or a polyolefin-type fluid, or a vegetable oil, or a grease.

Fuel compositions which are used in marine diesel engines usually contain some sulphur compounds. To neutralize the acidic compounds formed from these sulphur compounds a relatively high concentration of the basic salt is employed. Lubricating oil compositions for such marine applications suitably contain from 5 to 30%w of overbased alkaline earth metal sulphonate. Lubricating oil compositions for road engines may contain lower concentrations. The amount of overbased alkaline earth metal sulphonate in such lubricating oil compositions is preferably from 0.01 to 5%w, more preferably from 0.1 to 4.0%w.

Fuels, such as gasoline, kerosine, diesel fuel and gas oils, can also contain the above basic salts. The amount of these salts is similar to that in road engine lubricating oil compositions or lower; conveniently the amount is from 0.001 to 5%w, preferably from 0.01 to 1.0%w.

The lubricating oil composition can be prepared by mixing a concentrate containing up to 60%w of a basic salt as described above in a lubricating oil, with a lubricating base oil to give the desired concentration. The said lubricating oil may be the same as the one indicated above as a suitable hydrocarbon for use as the organic solvent in converting the alkyl xylene sulphonic acid to the overbased salt. The concentrate may conveniently contain a stabiliser, which may be selected from a variety of organic compounds, such as those described in British patent specification No. 818,325. These compounds include mono- or polyhydric alcohols, alkyl amines and alkyl phenols.

The lubricating oil compositions may further contain a number of other additives, such as antioxidants, foam inhibitors, corrosion inhibitors, viscosity index improvers, and pour point depressants, as can be established by a person skilled in the art.

If desired, the lubricating oil compositions may additionally contain an alkaline earth metal alkyl salicylate and/or alkylphenate, and/or $C_{15-40}$ alkyl orthoxylene sulphonate.

The invention will be illustrated by means of the following Example.

## Example

### (A) Preparation of alkylxylene sulphonic acid

1. Linear alpha-olefins having a $C_{11}$-$C_{12}$ chain length from the "SHELL " Higher Olefins Process (SHOP) were reacted with ortho-xylene in a stirred batch reactor provided with a condenser, at atmospheric pressure and a temperature of 95 to 150 °C. The xylene olefin molar ratios were in the range 5 to 10. As catalyst an activated clay was used, which is available commercially under the registered trade mark "FULCAT 22B". The progress of the reaction was followed by periodic gas-liquid chromatographic (GLC)-analysis. When after about five hours all the olefin had reacted, the catalyst was filtered off, after which the remaining unreacted xylene was flashed off in a rotating evaporator apparatus. Products containing 93-99% of mono-alkylxylenes were obtained by flashing off excess xylene.

This reaction may be represented by the equation:-

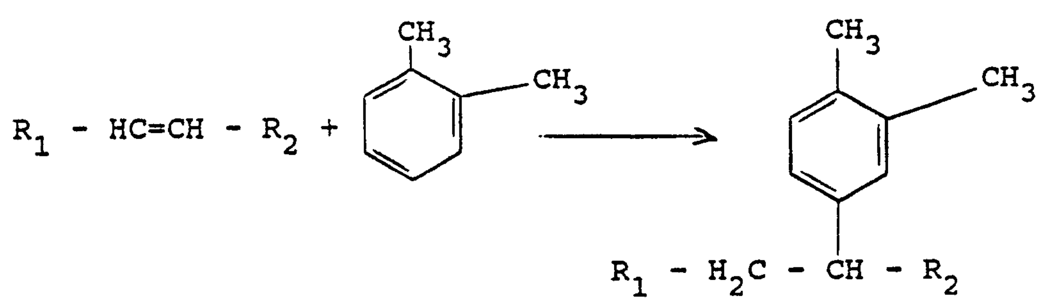

The illustrated isomeric structure (1,2,4) was found to constitute more than 95% of the product, with the remainder mainly the 1,2,3 isomer. The location of the xylene group on the $C_{11}$-$C_{12}$ alkyl group was as follows:-

2 position 18%; 3 position 16%; 4 position 15%; 5/6 position 51%.

2. The alkyl xylene from step A was sulphonated with gaseous sulphur trioxide in a stirred batch reactor. The ratios of the reactants and the other reaction conditions were as follows:-

$SO_3$/alkylated xylene = 1.05 (mole/mole)
$SO_3$ in $N_2$ = 7 %v
reaction temperature = 50° C

The $SO_3$ was added during 2.5 hours after which the reaction was allowed to proceed for yet another half hour at 50° C.

The resulting sulphonic acid had an active matter content of 92% (calc. as sulphonic acid), with the following isomer proportions:-

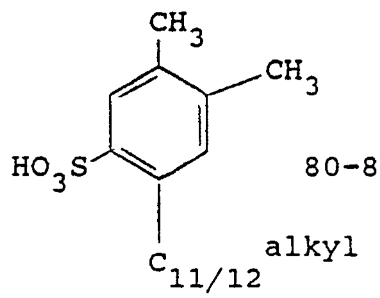

80-85%

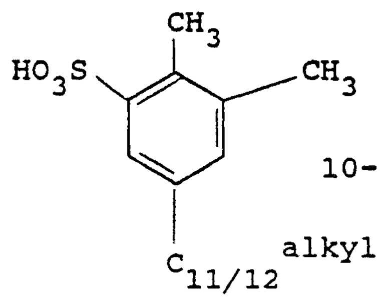

10-15%

(B) Preparation of overbased sulphonate

The alkyl orthoxylene sulphonic acid prepared in A) was dissolved in xylene (1mmol acid/g); 10% m methanol was added and the resulting mixture was reacted at 40° C with lime (acid/lime 1/1.4 eq/eq ratio), followed by 2 hours reaction at 60° C. The product was cooled to room temperature, filtered over "Hyflo" filter aid and diluent oil was added. The solvents were removed at 100° C under reduced pressure to yield an overbased product having a metal sulphonate molar ratio of 1.0-1.2:.

(C) Preparation of highly overbased sulphonate

The alkyl orthoxylene sulphonic acid prepared in (A) was dissolved in xylene (1mmol acid/g), 10% m/m methanol was added and the resulting mixture was reacted at 50° C with lime (acid/lime 1/12.6 mol/mol ratio), followed by one hour reaction at 50° C. Then carbonation was started (acid/$CO_2$ 1/6 mol/mol ratio) by addition of carbon dioxide at a rate of 0.12 eg/eq. sulphonic acid minute. The temperature rose and was maintained at 55-60° C. Subsequently methanol, water and some xylene were distilled off. The reaction mixture was allowed to cool and then diluted (threefold excess by volume) with n-hexane. solids were removed by filtration using "Hyflo" filter aid and subsequently diluent oil was added. Xylene/hexane was removed at 80° C under reduced pressure to yield a overbased product having a TBN (total base number) of 360-400 mg KOH/g or a metal ratio of 7.5 to 8.5:1.

(D) Stability/compatibility of luboil compositions

In order to assess the formation of haze and/or deposits, the above products prepared in (B) and (C) were diluted with a mixture of lubricating oils to give a total base number of approx. 25mg KOH/g (3% sulphated ash). These solutions were stored in tubes at 100° C and after 2 and 7 days they were visually assessed for amount of deposits and for brightness. The amount of deposits was expressed in % by volume. The brightness was classified as "bright" (B) or "hazy" (H). Similar type of tests (2% sulphated ash formulation; storage at 60° C) were carried out on luboil which contained also a calcium $C_{14-18}$ alkyl salicylate, base index c.8.0 (the sulphonate/salicylate ratio was chosen in such a way that each detergent contributed 50% to the total sulphated ash content of the formulation), in order to determine the compatibility of the alkyl xylene sulphonates with these alkyl salicylates.

The results of the measurements are shown in the Table I below, together with - for the purposes of comparison - those from similar (to B) overbased salts derived from mono-alkyl orthoxylenes in which the alkyl group contains 13-14 or 18 carbon atoms.

Table I

| Xylene Sulphonate | (B) | (C) | | |
|---|---|---|---|---|
| Alkyl length | $C_{11,12}$ | $C_{11}$ 12 | $C_{13/14}$ | $C_{18}$ |
| Luboil Stability* | | | | |
| 2 Days<br>7 Days | 0/B<br>0/B | 0/B<br>0/B | 0/B<br>0/B | 0/B<br>0/B |
| Salicylate Compatibility* | | | | |
| 2 Days<br>7 Days | 0/B<br>0/B | 0.6/B<br>0.8/B | 0/H<br>1.0/B | 1.2/B<br>0.9/B |

* expressed are % v/v deposits/brightness

The highly-overbased sulphonate of (C) was also tested in combination with a neutral calcium $C_{18}$ alkylxylene sulphonate such that each detergent contributed 50% to the total sulphated ash content of the formulation. After both 2 days and 7 days there were no deposits and the solutions remained bright.

(E) Comparative results with alkyl benzene sulphonates

Corresponding products were prepared based on benzene as the aromatic component, but they were generally viscous/gel-like materials having inadequate oil solubility. Various modifications made to the preparative procedure, in particular increasing the water content, and mixing the final product with a refined alkylate ($C_{14-18}$ alkylphenol). These products were evaluated as above, for their blend stability and salicylate compatibility with the results set out in Table 2 below.

Table 2

| Benzene Sulphonate | $C_{18}$ | $C_{24}$ | $C_{18}$ + $C_{24}$ |
|---|---|---|---|
| Alkyl Length | (all admixed with refined alkylate) | | |
| Luboil Stability | | | |
| 2 Days<br>7 Days | 0/vH<br>0/vH | 0/B<br>0/B | 0/B<br>0/B |
| Salicylate Compatibility | | | |
| 2 Days<br>7 Days | 35 C/B<br>15/B | 0/B<br>0.6/B | 0.15 H/B<br>0.7/B |

(F) Engine test performance

The ability of overbased alkyl orthoxylene sulphonates to control the formation of carbonaceous and lacquer deposits in a diesel engine has demonstrated in the 120 hour Caterpillar 1G2 piston cleanliness test

required for the American Petroleum Institute (API) CD and CE lubricant specification (ASTM STP 509). The test rates (1) deposits in the top groove, ie. % top groove fill, and (2) overall carbon and lacquer deposits, on all the grooves and lands in the piston belt area (with the exception of the crown land), which are expressed in a single term as total weighted demerits, TWD.

To demonstrate diesel detergency of this component, overbased calcium alkyl orthoxylene sulphonate according to (B) above was added to an API CD/SF category oil (1.3% wt. sulphated ash, SAE 15W40 grade) at a concentration of 20 mmole/kg of the sulphonate detergent (ie. 4.62 %wt calcium sulphonate additive), and its performance was compared to that of the base formulation. Replicate test results for both oils presented in Table 3 below show that addition of the sulphonate detergent leads to a substantial reduction in overall piston deposits in terms of both % top groove fill and total weighted demerits. The improvement in total weighted demerits for the sulphonate boosted oil is statistically significant at the 95% confidence level.

Table 3

| Oil | Base Oil | | Base Oil plus sulphonate | | |
|---|---|---|---|---|---|
| % Top groove fill | 60 | 66 | 56 | 21 | 53 |
| mean | 63 +/-4.2 | | 43.3 +/-19.4 | | |
| Total weighted demerits, TWD | 152 | 170 | 69.2 | 86.5 | 76.1 |
| mean | 161 +/-12.7 | | 77.3 +/-8.7 | | |

## Claims

1. An overbased alkaline earth metal alkyl orthoxylene sulphonate wherein the alkyl group contains 10-13 carbon atoms.

2. An overbased alkyl xylene sulphonate as claimed in claim 1 which contains a single alkyl substituent having 11-12 carbon atoms.

3. An overbased alkyl xylene sulphonate as claimed in claim 1 or 2 wherein the alkaline earth metal is calcium.

4. Process for preparing an overbased alkaline earth metal mono-alkyl orthoxylene sulphonate as defined in claim 1, which comprises sulphonation of an alkyl orthoxylene sulphonate, followed by addition of alkaline earth metal oxide or hydroxide.

5. Lubricating oil composition containing an overbased alkaline earth metal alkyl orthoxylene sulphonate as claimed in any one of claims 1-3.

6. Lubricating oil composition as claimed in claim 5 containing additionally an alkaline earth metal alkyl salicylate and/or alkyl phenate, and/or $C_{15-40}$ alkyl orthoxylene sulphonate.

European Patent Office

# EUROPEAN SEARCH REPORT

Application number

EP 89202057.9

## DOCUMENTS CONSIDERED TO BE RELEVANT

| Category | Citation of document with indication, where appropriate, of relevant passages | Relevant to claim | CLASSIFICATION OF THE APPLICATION (Int. Cl 5) |
|---|---|---|---|
| A | EP - A1 - 0 121 964 (SHELL) * Claim 1 * -- | 1,4 | C 07 C 309/31<br>C 10 M 135/10 |
| D,A | EP - A1 - 0 001 318 (EXXON) * Claims 1-3,5,6 * -- | 1-6 | |
| D,A | GB - A - 786 167 (SHELL) * Claims 1,5,7,15,17 * -- | 1,4-6 | |
| A | EP - A1 - 0 025 328 (EXXON) * Claims 1,9 * ---- | 1,5,6 | |

TECHNICAL FIELDS SEARCHED (Int. Cl 5)

C 07 C 309/00
C 10 M

The present search report has been drawn up for all claims

| Place of search | Date of completion of the search | Examiner |
|---|---|---|
| VIENNA | 14-11-1989 | REIF |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document